(19) Europäisches Patentamt
European Patent Office
Office européen des brevets

(11) **EP 1 335 467 B1**

(12) **EUROPÄISCHE PATENTSCHRIFT**

(45) Veröffentlichungstag und Bekanntmachung des Hinweises auf die Patenterteilung:
**19.09.2007   Patentblatt 2007/38**

(51) Int Cl.:
*H02H 7/26* *(2006.01)*          *H02H 1/00* *(2006.01)*

(21) Anmeldenummer: **02405104.7**

(22) Anmeldetag: **12.02.2002**

(54) **Empfang von digital codierten Schutzsignalen in einem Fernauslösegerät**

Receiving digitally coded protection signals in a remotely controlled breaker

Réception de signaux de protection codés numériques dans un télérupteur

(84) Benannte Vertragsstaaten:
**AT BE CH CY DE DK ES FI FR GB GR IE IT LI LU MC NL PT SE TR**

(43) Veröffentlichungstag der Anmeldung:
**13.08.2003   Patentblatt 2003/33**

(73) Patentinhaber: **ABB Schweiz AG**
**5400 Baden (CH)**

(72) Erfinder: **Schnyder, Hermann**
**8820 Wädenswil (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(56) Entgegenhaltungen:
- **YOSHIZUMI SERIZAWA ET AL: "PROBABILISTIC INVESTIGATIONS ON BIT ERROR RATIO REQUIREMENT FOR DIGITAL TELEPROTECTION EMPLOYING DIGITAL MICROWAVE LINKS" IEEE TRANSACTIONS ON POWER DELIVERY, IEEE INC. NEW YORK, US, Bd. 7, Nr. 1, 1992, Seiten 202-206, XP000247113 ISSN: 0885-8977**
- **FISCHER D ET AL: "DIGITAL TELEPROTECTION UNITS. A TECHNOLOGY OVERVIEW" IEEE TRANSACTIONS ON POWER DELIVERY, IEEE INC. NEW YORK, US, Bd. 7, Nr. 4, 1. Oktober 1992 (1992-10-01), Seiten 1769-1774, XP000298186 ISSN: 0885-8977**

**Beschreibung**

Technisches Gebiet

Die Erfindung bezieht sich auf das Gebiet der Schutztechnik für Hoch- und Mittelspannungsnetze. Sie bezieht sich auf ein Verfahren zum Empfang von digital codierten Schutzsignalen in einem Fernauslösegerät sowie ein Fernauslösegerät gemäss dem Oberbegriff der Patentansprüche 1 und 6.

Stand der Technik

Fernauslösegeräte oder Schutzsignalübertragungsgeräte dienen zur Übertragung von Schutz- oder Schaltbefehlen für einen Distanzschutz in elektrische Hoch- und Mittelspannungsnetzen sowie -anlagen. Schutzbefehle bewirken beispielsweise eine direkte oder indirekte Öffnung eines Schutzschalters und dadurch eine elektrische Abtrennung eines Teiles des Netzes oder der Anlage. Andere Schutzbefehle bewirken umgekehrt eine Blockierung der Öffnung eines Schutzschalters. Schutzbefehle müssen beispielsweise von einem Abschnitt einer Hochspannungsleitung zu einem anderen übertragen werden. Dazu erzeugt ein Sender in einem Fernauslösegerät entsprechend den Schutzbefehlen digital codierte Signale, die über eine Signalverbindung übertragen werden, welche durch ein digitales Kommunikationsmedium gebildet wird. Ein Empfänger in einem anderen Fernauslösegerät detektiert die übertragenen Signale und bestimmt die entsprechenden Werte der Schutzbefehle.

Abhängig von der Art des Schutzbefehls werden dabei unterschiedliche Anforderungen an die Signalübertragung und -detektion gestellt, die durch Übertragungszeit und Bitrate respektive Bandbreite sowie durch folgende Parameter charakterisierbar ist:

Puc    Sicherheitswert, d.h. Wahrscheinlichkeit, dass ein Befehl fälschlicherweise empfangen wird, obwohl er gar nicht gesendet wurde. Ein niedriger Wert von Puc entspricht einer hohen Sicherheit der Übertragung.

Pmc    Verlässlichkeitswert, d.h. Wahrscheinlichkeit, dass ein Befehl, der gesendet wurde, nicht empfangen wird. Ein niedriger Wert von Pmc entspricht einer hohen Verlässlichkeit der Übertragung.

Im allgemeinen trifft zu, dass mit zunehmender Störleistung, d.h. mit einer zunehmenden Bitfehlerrate (BER) des Übertragungskanals

- die Sicherheit zuerst abnimmt und dann wieder zunimmt, d.h. der Sicherheitswert Puc zuerst zunimmt und dann wieder abnimmt, und
- die Verlässlichkeit dauernd abnimmt, d.h. der Verlässlichkeitswert Pmc dauernd zunimmt.

Störungen der Übertragung durch Bitfehler dürfen im Ruhefall keine Befehle vortäuschen und andererseits im Befehlsfall einen echten Befehl nicht unzulässig verzögern oder sogar zu dessen Verlust führen. Grosse Sicherheit und grosse Verlässlichkeit bei gleichzeitig kurzer Übertragungszeit und kleiner Bandbreite sind widersprüchliche Forderungen. Es kann aber immer eine Grösse auf Kosten der anderen Eigenschaften verbessert werden. Der Kompromiss ist durch die Anwendung gegeben. So erfordern beispielsweise indirekt auslösende Schutzsysteme kurze Übertragungszeiten bei grosser Verlässlichkeit und mässiger Sicherheit. Anwendungen mit direkter Schalterauslösung hingegen verlangen eine sehr grosse Sicherheit und Verlässlichkeit bei geringeren Anforderungen an die Übertragungszeit.

Ein einzelner Schutzbefehl oder eine Kombination von mehreren Schutzbefehlen werden durch Schutzsignale dargestellt respektive codiert. Beispielsweise stellt ein erstes Schutzsignal einen ersten Schutzbefehl dar, und ein zweites Schutzsignal den ersten Schutzbefehl in Kombination mit einem zweiten Schutzbefehl. Um den verschiedenen Anforderungen zu genügen, werden die Schutzsignale digital codiert und redundant übertragen. Dies erhöht die Sicherheit und die Verlässlichkeit. Das Einfügen der Redundanz geschieht beispielsweise durch Verwendung eines Digitalcodes mit unterschiedlichen Codewörtern mit einer Hammingdistanz und/oder durch Wiederholung von Datenrahmen, welche die Codewörter enthalten.

Um entscheiden zu können, dass ein Schutzsignal und damit eines oder mehrere Schutzbefehle mit einer vorgegebenen Sicherheit empfangen worden ist, muss der Empfänger innerhalb eines Zeitfensters vorgegebener Länge eine Anzahl n korrekter Codewörter detektieren. Dies ist beispielsweise beschrieben in "Dimat Digital Teleprotection System Type TPD-1, General Description Rev.6 October '98", Abschnitte 3.1. und 3.2. Bei einem geforderten Sicherheitswert Puc hängt die Anzahl n von einem Grad einer Störung des Übertragungskanals ab. Im Falle eines angenommenen maximalen Störungsgrads ist eine maximale Anzahl $n_{max}$ korrekt detektierter Codewörter nötig, um Einhaltung des geforderten Wertes von Puc zu garantieren. Unter normalen Betriebsbedingungen ist die Störung des Übertragungskanals jedoch viel tiefer als im schlechtesten Fall und somit würden weniger als $n_{max}$ korrekte Codewörter ausreichen. Bisherige Empfänger warten in jedem Fall $n_{max}$ korrekte Codewörter ab, um immer die erforderliche Sicherheit gewährleisten zu können.

Darstellung der Erfindung

Es ist deshalb Aufgabe der Erfindung, ein Verfahren zum Empfang von digital codierten Schutzsignalen in einem Fernauslösegerät sowie ein Fernauslösegerät der eingangs genannten Art zu schaffen, die eine schnellere Detektion von Schutzsignalen ermöglichen.

Diese Aufgabe lösen ein Verfahren zum Empfang von digital codierten Schutzsignalen in einem Fernauslösegerät sowie ein Fernauslösegerät mit den Merkmalen der Patentansprüche 1 und 6.

Im erfindungsgemässen Verfahren zum Empfang von digital codierten Schutzsignalen in einem Fernauslösegerät wird eine Sequenz von digitalen Codewörtern auf einem Übertragungskanal empfangen und gilt ein Schutzsignal als empfangen, wenn in dieser Sequenz ein dem Schutzsignal entsprechender Code innerhalb eines Zeitfensters vorgegebener Länge eine Anzahl n mal detektiert wurde, wobei die Anzahl n nach Massgabe einer Schätzung eines aktuellen Masses für eine Störung des Übertragungskanals bestimmt wird.

Dadurch wird es möglich, die Anzahl n bei wenig gestörtem Übertragungskanal zu reduzieren und dadurch eine Übertragungszeit des Schutzsignals zu verkleinern, und dabei trotzdem eine vorgegebene Sicherheitsanforderung an die Übertragung einzuhalten

In einer bevorzugten Ausführungsform der Erfindung ist das Mass für die Störung des Übertragungskanals eine Bitfehlerrate des Übertragungskanals und wird die Anzahl n anhand der Bitfehlerrate und einer Anforderung an die Sicherheit der Übertragung bestimmt. In einer weiteren bevorzugten Ausführungsform der Erfindung wird die Bitfehlerrate anhand der empfangenen Sequenz von Codewörtern bestimmt.

Das erfindungsgemässe Fernauslösegerät weist ein Mittel zum Empfang einer Sequenz von digitalen Codewörtern auf einem Übertragungskanal, mindestens einen Detektor zur Detektion eines Codes, welcher einem Schutzsignal entspricht, und mindestens ein Mittel zur Signalisierung, dass ein Schutzsignal als empfangen gilt, falls in dieser Sequenz ein dem Schutzsignal entsprechender Code innerhalb eines Zeitfensters vorgegebener Länge eine Anzahl n mal detektiert wurde, wobei die Anzahl n nach Massgabe einer Schätzung eines aktuellen Masses für eine Störung des Übertragungskanals bestimmbar ist.

In einer bevorzugten Ausführungsform weist das erfindungsgemässe Fernauslösegerät mehrere parallel arbeitende Detektoren mit jeweils individuell anhand der Bitfehlerrate und anhand einer für den jeweiligen Detektor vorgegebenen Sicherheit eingestellter Anzahl n benötigter Wiederholungen. Dadurch ist es möglich, dass unterschiedliche Schaltsignale mit unterschiedlichen Sicherheitsanforderungen mit einer für den jeweiligen Schaltsignal kürzesten Zeit übertragbar sind.

Weitere bevorzugte Ausführungsformen gehen aus den abhängigen Patentansprüchen hervor.

Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:

Figur 1     ein Signalflussbild eines Fernauslösegeräts gemäss der Erfindung; und
Figur 2     typische Abhängigkeiten zwischen Bitfehlerrate, Sicherheitswerten und Anzahl korrekt empfangener Codes.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

Wege zur Ausführung der Erfindung

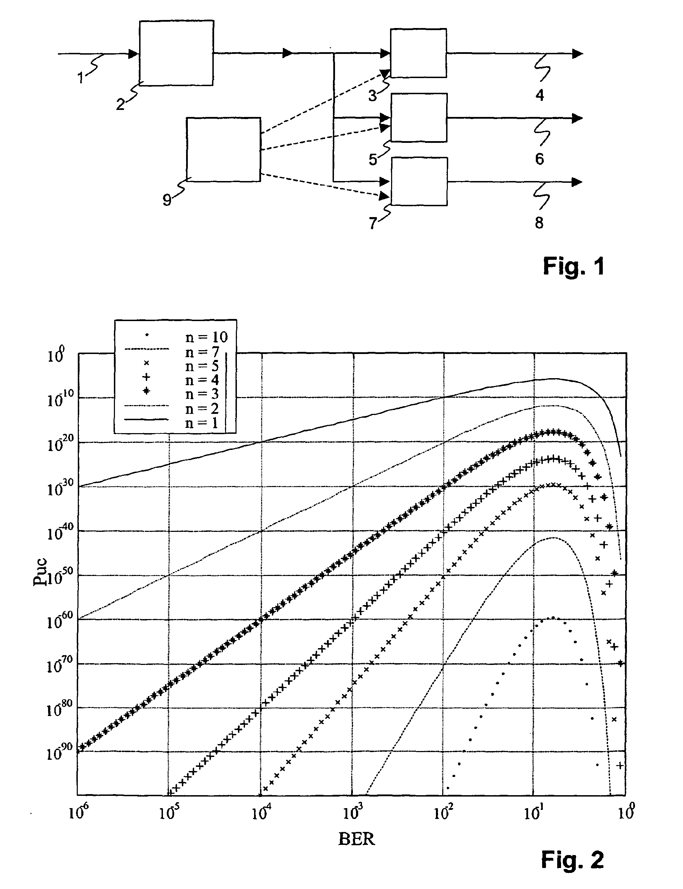

Figur 1 zeigt ein Signalflussbild eines Fernauslösegeräts gemäss der Erfindung. Ein Empfangssignaleingang 1 führt auf einen Empfänger 2. Ein Ausgang des Empfängers 2 führt auf mehrere Detektoren 3,5,7 mit jeweils zugeordneten Detektorausgängen 4,6,8. Ein Störungsschätzer 9 ist zur Übermittlung eines Masses für eine Störung eines Empfangssignals an die Detektoren 3,5,7 ausgebildet. Diese Übermittlung ist mit gestrichelten Linien dargestellt.

Der Empfänger 2 empfängt am Empfangssignaleingang 1 Signale von einem Übertragungskanal und erzeugt gegebenenfalls durch geeignete Demodulation dieser Signale und unter Verwendung bekannter Synchronisationsmechanismen als Ausgang eine Sequenz von digitalen Codewörtern, beispielsweise eine Folge von Datenrahmen.

Ein erster Detektor 3 mit einem ersten Detektorausgang 4, ein zweiter Detektor 5 mit einem zweiten Detektorausgang 6 und ein dritter Detektor 7 mit einem dritten Detektorausgang 8 sind jeweils zur Detektion eines bestimmten von drei Schutzsignalen ausgebildet. Selbstverständlich ist die Erfindung auch mit nur einem, zwei, oder mit einer grösseren Anzahl von Detektoren 3,5,7 ausführbar. In der Folge wird die Funktionsweise eines einzelnen Detektors erläutert. Der Detektor bestimmt ein Vorhandensein respektive eine Abwesenheit des zugeordneten Schutzsignals unter Einhaltung eines vorgegebenen Sicherheitswerts Puc. Dazu weist er ein Mittel auf zur Detektion eines Codes, welcher dem Schutzsignal entspricht respektive diesen Schutzsignal codiert. Die Detektion des Codes, also die Bestimmung ob der Code empfangen worden ist oder nicht, geschieht anhand der Sequenz von digitalen Codewörtern.

In einer ersten bevorzugten Ausführungsform der Erfindung ist der Code ein einzelnes Bit innerhalb eines Datenrahmens der Sequenz. Das Bit entspricht einem bestimmten Schutzsignal. In einer zweiten bevorzugten Ausführungsform der Erfindung ist der Code ein Codewort aus mehreren Bits. Ein Codewort entspricht einem bestimmten Schutzsignal. In beiden Fällen entspricht das Schutzsignal entweder genau einem Schutzbefehl oder einer Kombination von mehreren Schutzbefehlen. Ein Schutzbefehl ist beispielsweise ein Schalt- oder Blockierbefehl, der von einem Fernauslösegerät an ein Fernauslösegerät mit der erfindungsgemässen Detektion übermittelt wird.

Das Schutzsignal gilt als mit einem bestimmten Sicherheitswert Puc empfangen, falls der entsprechende Code in einem Zeitfenster vorgegebener Länge L ein bestimmte Anzahl n mal empfangen worden ist. Beziehungen zwischen diesen Grössen lassen sich mittels bekannter Verfahren aus der Detektionstheorie ermitteln. Im folgenden wird beispielhaft eine Beziehung verwendet, wie sie im Standard IEC 60834-1 Draft Jan. 1997 Annex C angegeben ist. Die Erfindung ist mit beliebigen anderen Codes und Beziehungen zwischen den relevanten Grössen ausführbar und nicht auf dieses Beispiel beschränkt. Es ist

$$Puc = \left( p^d \left(1 - p\right)^{m-d} \right)^n$$

wobei

p    die Bitfehlerrate BER,

d    eine minimale Hammingdistanz des Codes, und

m    eine Anzahl Bits des Codewortes ist.

Figur 2 zeigt beispielhaft Abhängigkeiten zwischen der Bitfehlerrate BER, Sicherheitswerten Puc und einer Anzahl n korrekt empfangener Codes. Beispielsweise ergibt sich, falls ein Signal bereits nach n=2-maligem Auftreten des entsprechenden Codes als detektiert signalisiert wird, bei einer BER von 10e-6 ein Sicherheitswert Puc von 10e-60. Für eine steigende BER steigt auch Puc. Nach Überschreiten eines Maximums fällt Puc wieder ab, da dann die Störungen überwiegen, das empfangene Signal immer zufälliger wird und damit die Wahrscheinlichkeit des fälschlichen Empfangs eines Befehls wieder kleiner. Die Kurven wurden für einen Code berechnet, der 21 Nutzbits zu 31 Bits mit einer Hammingdistanz d = 5 codiert.

Gemäss der Erfindung werden die gezeigten Abhängigkeiten entsprechend dem verwendeten Code bestimmt und daraus aus einer aktuellen Schätzung der BER die notwendige Anzahl n bestimmt, die für die Einhaltung eines vorgegebenen Sicherheitswertes Puc erforderlich ist. Beispielsweise lässt sich aus der Figur 2 die folgende Tabelle ablesen, die besagt, dass für eine Sicherheit Puc < 10e-20 und eine BER im angegebenen Bereich n den angegebenen Wert aufzuweisen hat.

| BER | n |
|---|---|
| < 10e-4 | 1 |
| 10e-4 ... 10e-2 | 2 |
| > 10e-2 | 4 |

Analog ist für eine Sicherheit Puc < 1 0e-40

| BER | n |
|---|---|
| < 10e-4 | 2 |
| 10e-4 ... 10e-3 | 3 |
| 10e-3 ... 10e-2 | 4 |
| > 10e-2 | 7 |

Eine oder mehrere solcher Tabellen werden im Detektor abgelegt. Anhand der gemessenen BER und dem geforderten Puc wird aus den Tabellen n ausgelesen und durch den Detektor als Schwelle für die Detektion des Schutzsignals verwendet.

Die Schätzung der aktuellen BER geschieht im Störungsschätzer 9 wiederholt während eines Betriebs des Fernauslösegeräts, so dass auch die Anzahl n zu detektierender Codes dauernd den aktuellen Übertragungseigenschaften nachgeführt wird. Damit ist immer die kürzestmögliche Auswertezeit ohne Überschreiten eines vorgegebenen maximalen Sicherheitswertes gewährleistet.

Die Schätzung der BER geschieht in einer ersten bevorzugten Ausführungsform der Erfindung anhand von Referenzsequenzen, die periodisch durch den Sender in die Sequenz von Codewörtern eingeschoben werden.

In einer zweiten bevorzugten Ausführungsform der Erfindung geschieht die Schätzung auch anhand oder ausschliesslich anhand der decodierten Schutzsignale. Dabei werden bekannte Codes verwendet, mit denen ein Auftreten eines oder mehrerer Bitfehler detektiert werden kann. In einem Digitalcode mit Hamming-Distanz d lassen sich, falls d gerade ist, bis zu (d/2)-1 Bitfehler, und falls d ungerade ist, bis zu (d-1)/2 Bitfehler pro Codewort feststellen, falls keine Bitfehler korrigiert werden.

Anhand derart detektierter Bitfehler wird ständig die Anzahl Bitfehler in einem zweiten Zeitfenster erfasst und daraus die aktuelle BER bestimmt.

In einer bevorzugten Variante der zweiten Ausführungsform der Erfindung geschieht die Detektion eines Codewortes, welches ein bestimmtes Schutzsignal codiert, nach Massgabe von Anforderungen an die Sicherheit und die Verlässlichkeit. Es wird dabei ein Code mit einer bestimmten Hamming-Distanz d zwischen den verschiedenen Codeworten verwendet Erfindungsgemäss geschieht die Detektion eines einzelnen Codewortes gemäss einer der folgenden drei Möglichkeiten:

1. Sicherheitsoptimiert: Die gesamte Hamming-Distanz wird verwendet, um Fehler zu detektieren, was eine maximale Sicherheit ergibt, da (d - 1) Bitfehler erkennbar sind. Die Verlässlichkeit dieser Detektion ist jedoch vergleichsweise klein, da keine Bitfehler korrigiert werden und schon ein einziger Bitfehler im Codewort dazu führt, dass das Codewort nicht detektiert wird.

2. Verlässlichkeitsoptimiert: Die gesamte Hamming-Distanz wird verwendet, um so viele Fehler wie möglich zu korrigieren, was eine maximale Verlässlichkeit ergibt, wobei aber die Sicherheit kleiner ist als bei der ersten Möglichkeit. Es sind d/2 (falls d gerade ist) respektive (d-1)/2 (falls d ungerade ist) Bitfehler korrigierbar. Bei nicht korrigierbaren Fehlern gilt das Codewort als nicht detektiert.

3. Es wird eine Mischform zwischen diesen beiden Extremen implementiert, das heisst, dass ein Teil der Information der Bits der Hamming-Distanz zur Fehlerdetektion und ein Teil zur Fehlerkorrektur verwendet wird. Je nach Länge der Hamming-Distanz sind verschiedene Kombinationen möglich. Bezüglich den Werten von Sicherheit und Verlässlichkeit liegt diese Möglichkeit zwischen den ersten beiden.

Je nachdem, ob ein Codewort als detektiert gilt oder nicht, wird es bei der Zählung der Anzahl n empfangener Codes im Zeitfenster berücksichtigt oder nicht. Falls n=1, also falls der Empfang genau eines Codes zur Detektion des Schutzsignals ausreicht, so sind Zuverlässigkeit und Sicherheit der Detektion des Schutzsignals im Wesentlichen durch Zuverlässigkeit und Sicherheit der Detektion des Codewortes entsprechend der Wahl einer der drei oben gezeigten Möglichkeiten bestimmt. Welche der drei Möglichkeiten gewählt wird, ist vorzugsweise für jedes Schutzsignal einzeln einstellbar.

Beispielsweise wird im Sender ein Codewort mit der Hamming-Distanz d=5 codiert. Die maximale Anzahl korrigierbarer Bitfehler pro Rahmen ist (d-1)/2 = 2. Entsprechend der Wahl einer der drei oben gezeigten Möglichkeiten ergibt sich:

1. Sicherheitsoptimiert: Es werden keine Bitfehler korrigiert, maximal. 4 Bitfehler können erkannt werden

2. Verlässlichkeitsoptimiert: Maximal. 2 Bitfehler können erkannt und korrigiert werden.

3. Mischform: Maximal. 1 Bitfehler kann korrigiert werden, maximal. 3 Bitfehler können erkannt werden.

Auswirkungen der Wahl der drei Modes beim Empfang eines Codewortes mit einer bestimmten Anzahl von Bitfehlern sind in der folgenden Tabelle dargestellt:

| Bitfehler | Sicherheitsoptimiert | Verlässlichkeitsoptimiert | Mischform |
|---|---|---|---|
| 0 | √ | √ | √ |
| 1 | 0 | √ | √ |
| 2 | 0 | √ | 0 |

(fortgesetzt)

| Bitfehler | Sicherheitsoptimiert | Verlässlichkeitsoptimiert | Mischform |
|-----------|---------------------|---------------------------|-----------|
| 3 | 0 | f | 0 |
| 4 | 0 | f | f |
| $\geq 5$ | f | f | f |

wobei die Abkürzungen bedeuten:

√     das Codewort wird korrekt detektiert
0     es wird kein Codewort detektiert
f     es wird ein falsches Codewort detektiert

Die Elemente des Fernauslösegeräts, welche den Signalfluss gemäss Figur 1 realisieren, werden vorzugsweise durch eine entsprechend programmierte Datenverarbeitungseinheit oder anwendungsspezifische integrierte Schaltungen (ASICs, FPGAs) realisiert. Sie sind aber auch durch analoge Bauelemente und/oder in Kombination mit diskreten Logikelementen und/oder programmierten Schaltkreisen implementierbar. In einer bevorzugten Ausführungsform der Erfindung sind die Detektoren 3,5,7 und/oder der Störungsschätzer 9 mittels eines entsprechend programmierten digitalen Signalprozessors implementiert.

Ein Computerprogramm zum Empfang von digital codierten Schutzsignalen in einem Fernauslösegerät gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt ein computerlesbares Medium auf, auf welchem die Computerprogrammcodemittel gespeichert sind.

Bezugszeichenliste

1     Empfangssignaleingang
2     Empfänger
3     erster Detektor
4     erster Detektorausgang
5     zweiter Detektor
6     zweiter Detektorausgang
7     dritter Detektor
8     dritter Detektorausgang
9     Störungsschätzer

**Patentansprüche**

1. Verfahren zum Empfang von digital codierten Schutzsignalen in einem Fernauslösegerät für einen Distanzschutz in elektrischen Anlagen, in welchem eine Sequenz von digitalen Codewörtern auf einem Übertragungskanal empfangen wird und ein Schutzsignal als empfangen gilt, wenn in dieser Sequenz ein dem Schutzsignal entsprechender Code innerhalb eines Zeitfensters vorgegebener Länge eine Anzahl n mal detektiert wurde, **dadurch gekennzeichnet,**
dass die Anzahl n nach Massgabe einer Schätzung eines aktuellen Masses für eine Störung des Übertragungskanals bestimmt wird.

2. Verfahren gemäss Anspruch 1, **dadurch gekennzeichnet, dass** das Mass für die Störung des Übertragungskanals eine Bitfehlerrate des Übertragungskanals ist und die Anzahl n anhand der Bitfehlerrate und einer Anforderung an die Sicherheit der Übertragung bestimmt wird.

3. Verfahren gemäss Anspruch 2, **dadurch gekennzeichnet, dass** die Bitfehlerrate anhand der empfangenen Sequenz von Codewörtern bestimmt wird.

4. Verfahren gemäss Anspruch 1, **dadurch gekennzeichnet, dass** eine Detektion mehrerer Schutzsignale anhand mehrerer Codes simultan durchgeführt wird, wobei bei jedem Schutzsignal eine zugeordnete eigene Sicherheit vorgegeben wird.

5. Verfahren gemäss Anspruch 1, **dadurch gekennzeichnet, dass** der Code ein Codewort aus mehreren Bits ist, und dass das Codewort nach Massgabe des Schutzsignals mit optimaler Sicherheit oder optimaler Verlässlichkeit oder gemäss einer Mischform detektiert wird.

6. Fernauslösegerät für einen Distanzschutz in elektrischen Anlagen, aufweisend ein Mittel (2) zum Empfang einer Sequenz von digitalen Codewörtern auf einem Übertragungskanal, mindestens einen Detektor (3,5,7) zur Detektion eines Codes, welcher einem Schutzsignal entspricht, und mindestens ein Mittel zur Signalisierung, dass ein Schutzsignal als empfangen gilt, falls in dieser Sequenz ein dem Schutzsignal entsprechender Code innerhalb eines Zeitfensters vorgegebener Länge eine Anzahl n mal detektiert wurde, **dadurch gekennzeichnet, dass** die Anzahl n nach Massgabe einer Schätzung eines aktuellen Masses für eine Störung des Übertragungskanals bestimmbar ist.

7. Fernauslösegerät nach Anspruch 6, **dadurch gekennzeichnet, dass** das Fernauslösegerät mehrere parallel arbeitende Detektoren (3,5,7) aufweist, bei welchen die Anzahl n benötigter Wiederholungen jeweils individuell anhand des Masses für die Störung und anhand einer für den jeweiligen Detektor (3,5,7) vorgegebenen Sicherheit einstellbar ist.

## Claims

1. A method for the reception of digitally coded protection signals in a remote tripping device for distance protection in electrical systems, in which a sequence of digital code words is received on a transmission channel, and a protection signal is deemed to be received if in this sequence a code corresponding to the protection signal has been detected a number n times within a time window of predetermined length,
**characterised in that** the number n is determined according to an estimation of a current measure of a disturbance on the transmission channel.

2. The method according to Claim 1,
**characterised in that** the measure of the disturbance on the transmission channel is a bit error rate of the transmission channel and the number n is determined with the aid of the bit error rate and a requirement for the safety and/or security level of the transmission.

3. The method according to Claim 2,
**characterised in that** the bit error rate is determined with the aid of the received sequence of code words.

4. The method according to Claim 1,
**characterised in that** a detection of a plurality of protection signals is simultaneously carried out with the aid of a plurality of codes, wherein
for each protection signal an assigned own safety and/or security level is prescribed.

5. The method according to Claim 1,
**characterised in that** the code is a codeword of a plurality of bits, and that the codeword is detected according to the protection signal with optimum safety and/or security or with optimum reliability, or on the basis of a mixed form.

6. A remote tripping device for distance protection in electrical systems, having a means (2) for the reception of a sequence of digital code words on a transmission channel, at least one detector (3,5,7) for the detection of a code, which corresponds to a protection signal, and at least one means for signalling that a protection signal is deemed to be received, if in this sequence a code corresponding to the protection signal has been detected a number n times within a time window of predetermined length,
**characterised in that** the number n can be determined according to an estimation of a current measure of a disturbance on the transmission channel.

**7.** The remote tripping device according to Claim 6,
**characterised in that** the remote tripping device has a plurality of detectors (3,5,7) working in parallel, in which the number n of required repetitions is in each case individually adjustable with the aid of the measure of the disturbance, and with the aid of a safety and/or security level prescribed for the detector in question (3,5,7).

**Revendications**

**1.** Procédé de réception de signaux de protection codés numériques dans un télérupteur en vue d'une protection à distance dans des installations électriques, dans lequel une séquence de mots de code numériques est reçue sur un canal de transmission et un signal de protection est considéré comme reçu, lorsque dans cette séquence un code correspondant au signal de protection a été détecté un nombre de n fois à l'intérieur d'une fenêtre temporelle d'une longueur prescrite,
**caractérisé en ce que**
le nombre n est déterminé selon une estimation d'une proportion actuelle d'une perturbation du canal de transmission.

**2.** Procédé selon la revendication 1, **caractérisé en ce que** la proportion de perturbation du canal de transmission est un taux d'erreurs binaires du canal de transmission et le nombre n est déterminé sur la base du taux d'erreurs binaires et d'une exigence de sécurité de la transmission.

**3.** Procédé selon la revendication 2, **caractérisé en ce que** le taux d'erreurs binaires est déterminé sur la base de la séquence reçue de mots de code.

**4.** Procédé selon la revendication 1, **caractérisé en ce que** une détection de plusieurs signaux de protection sur la base de plusieurs codes est effectuée simultanément, moyennant quoi pour chaque signal de protection une sécurité propre coordonnée est prescrite.

**5.** Procédé selon la revendication 1, **caractérisé en ce que** le code est un mot de code de plusieurs bits et **en ce que** le mot de code est détecté selon le signal de protection avec une sécurité optimale ou une fiabilité optimale ou selon une forme mixte.

**6.** Télérupteur en vue d'une protection à distance dans des installations électriques, présentant un moyen (2) de réception d'une séquence de mots de code numériques sur un canal de transmission, au moins un détecteur (3,5,7) pour détecter un code, qui correspond à un signal de protection, et au moins un moyen de signalisation, en ce que un signal de protection est considéré comme reçu, au cas où dans cette séquence un code correspondant au signal de protection a été détecté un nombre de n fois à l'intérieur d'une fenêtre temporelle d'une longueur prescrite,
**caractérisé en ce que**
le nombre n peut être déterminé selon une estimation d'une proportion actuelle d'une perturbation du canal de transmission.

**7.** Télérupteur selon la revendication 6, **caractérisé en ce que** le télérupteur présente plusieurs détecteurs (3,5,7) fonctionnant en parallèle, dans lesquels le nombre n de répétitions nécessaires peut être réglé respectivement individuellement sur la base de la proportion de la perturbation et sur la base d'une sécurité prescrite pour le détecteur (3,5,7) respectif.

Fig. 1

Fig. 2